# EUROPÄISCHE PATENTSCHRIFT

(11) **EP 1 507 133 B1**
(45) Veröffentlichungstag und Bekanntmachung des Hinweises auf die Patenterteilung: **29.06.2016**
(21) Anmeldenummer: 04012545.2
(22) Anmeldetag: 27.05.2004
(51) Int. Cl.: G01F 23/284

(54) **Vorrichtung zur Überwachung eines Feldgeräts**
Apparatus for monitoring a field device
Appareil de surveillance d'un dispositif de terrain

(30) Priorität: 17.06.2003 DE 10327499; 26.11.2003 DE 10355784
(43) Veröffentlichungstag der Anmeldung: 16.02.2005
(73) Patentinhaber: Endress + Hauser GmbH + Co. KG, 79689 Maulburg (DE)
(72) Erfinder: Klöfer, Peter, 79585 Steinen (DE); Dreyer, Volker, 79541 Lörrach (DE); Müller, Roland, 79585 Steinen (DE); Schroth, Herbert, Dr., 79650 Schopfheim (DE); Lopatin, Sergej, Dr., 79540 Lörrach (DE)
(74) Vertreter: Andres, Angelika Maria

(56) Entgegenhaltungen:
- EP-A- 1 217 352
- EP-A2- 0 464 529
- WO-A-95/27668
- DE-U1- 9 219 100
- US-A- 5 872 494

## Beschreibung

Die Erfindung betrifft eine Vorrichtung zur Überwachung eines Feldgeräts zur Bestimmung und/oder Überwachung einer physikalischen und/oder chemischen Prozeßgröße eines Prozeßmediums.

Zur Detektion des Grenzstandes von Flüssigkeiten oder Schüttgütern in Behältern werden kapazitive Meßeinrichtungen oder Vibrationssysteme eingesetzt. Neben diesen Grenzstanddetektoren, die das Erreichen eines vorgegebenen Füllstandes signalisieren, sobald sie in Kontakt mit dem Prozeßmedium kommen, gibt es berührungslos arbeitende Meßsysteme, die als Meßstrahlung Ultraschallwellen, Mikrowellen - oder in besonders kritischen Anwendungen - radioaktive Strahlung verwenden. Mit Ausnahme der Vibrationssysteme sind die zuvor genannten Meßgeräte natürlich auch zur kontinuierlichen Messung des Füllstands eines Prozeßmediums in einem Behälter geeignet.

Die Meßgeräte sind üblicherweise gegen den Prozeß hin abgedichtet. Je nach Einsatzfall ist es erforderlich, das Meßgerät gegen die Prozeß und/oder gegen eine entfernte Kontrollstelle hin sicher und zuverlässig abzukapseln. Besonders wichtig ist diese Abdichtung bzw. Abkapselung, wenn sich in dem Behälter eine aggressive oder explosive Atmosphäre befindet. Dringt z.B. eine explosive Gasmischung in das Gehäuse des Meßgeräts ein, so besteht durch den unmittelbaren Kontakt mit den elektrischen bzw. elektronischen Komponenten des Meßgeräts eine akute Explosionsgefahr. Darüber hinaus ist ein Meßgerät üblicherweise über Verbindungsleitungen mit einer entfernten Kontrollstelle verbunden. Ist das Meßgerät nicht verkapselt, so kann nicht ausgeschlossen werden, daß das explosive, aggressive oder giftige Gasgemisch über die Leitungen in die entfernte Kontrollstelle gelangt und dort Schaden anrichtet.

In der Druckschrift EP 0464 529 A2 wird ein Schwimmer-basiertes Füllstandsmessgerät beschrieben. In der dort beschriebenen Schrift steht der Raum, in dem sich der Schwimmer befindet, unter Über- oder Unterdruck, wobei dies durch eine Druckmessung überwacht wird.

In der Gebrauchsmusterschrift DE 9219 100 U1 ist eine Vorrichtung zur Prüfung der hermetischen Dichtigkeit mittels eines Ultraschallsignalgebers beschrieben.

Die internationale Patentanmeldung WO 95/27668 befasst sich mit einer Vorrichtung zur Leckage-Detektion von giftigen Medien bei deren Be-/ oder Entladung eines Containers mittels einer Vakkum-Glocke.

Der Erfindung liegt die Aufgabe zugrunde, ein Füllstandsmeßgerät für den Einsatz in gefährdeten und kritischen Bereichen vorzuschlagen.

Die Aufgabe wird durch eine nachfolgend beschriebene Vorrichtung gelöst: es sind eine erste dem Prozeß zugewandten Dichtstufe und zumindest ein Gehäuse mit einem vorgegebenen Innenvolumen vorgesehen, wobei das Gehäuse auf der vom Prozeß abgewandten Seite der ersten Dichtstufe angeordnet ist; Energie wird über die erste Dichtstufe in Richtung des Prozeßmediums übertragen und tritt mit dem Prozeßmedium in Wechselwirkung; in dem Gehäuse ist zumindest eine Detektoreinheit vorgesehen, die zumindest eine Zustandsgröße des Innenvolumens des Gehäuses überwacht; eine Regel-/Auswerteeinheit bestimmt anhand der mit dem Prozeßmedium wechselwirkenden Energie die physikalische und/oder chemische Prozeßgröße; die Regel-/Auswerteeinheit und/oder eine anderweitige Überwachungseinheit erkennt anhand der überwachten Zustandsgröße in dem Innenvolumen des Gehäuses und/oder bringt zur Anzeige, ob die Dichtstufe das Gehäuse gegen den Prozeß hin abdichtet; ein Alarm wird ausgegeben, sobald die überwachte Zustandsgröße in dem Innenvolumen des Gehäuses einen vorgegebenen Grenzwert erreicht. Bei der zuvor genannten anderweitigen Überwachungseinheit kann es sich z.B. um eine sog. Berstscheibe handeln. Diese spricht z.B. an, wenn es infolge einer Leckage zu einem Druckanstieg in dem Gehäuse kommt.

Im Prinzip können als Detektoreinheit die unterschiedlichsten Einheiten eingesetzt werden. Bevorzugt wird in dem Innenraum des Gehäuses die Feuchte, der Druck oder die Gaskonzentration überwacht. Damit ein Meßgerät über eine Zweidrahtleitung betrieben werden kann, muß sein Leistungs-verbrauch und damit auch der Leistungsverbrauch der Detektoreinheit gering sein. Idealerweise wird daher eine passive Detektoreinheit, z. B. die o.g. Berstscheibe, eingesetzt.

Damit eine Leckage auch unmittelbar zur Anzeige kommen kann, ist desweiteren z.B. vorgesehen, daß ein beweglich angeordnetes Teil durch den ansteigenden Druck in dem Gehäuse verschoben wird. Diese Verschiebung kann direkt vor Ort zur Anzeige benutzt werden, alternativ ist dabei auch eine elektrische Auswertung, beispielsweise über ein Reed-Relais oder einen anderen Näherungsschalter möglich, der dem Bedienpersonal den Okay-Zustand bzw. einen kritischen Zustand auch an einem entfernten Ort anzeigt.

Der Vorteil der Erfindung ist insbesondere darin zu sehen, daß die Vorrichtung auch dann noch funktionsfähig bleibt, wenn die Detektoreinheit anspricht. Das ist insbesondere dann möglich, wenn das Gehäuse mit der Detektoreinheit dem eigentlichen Transmitter bzw. der Regel-/Auswerteeinheit vorgelagert ist. Besonders vorteilhaft ist in diesem Zusammenhang darüber hinaus die Verwendung einer zweiten Dichtstufe, die der Elektronik vorgelagert ist und diese bei Versagen der ersten Dichtstufe vor dem Einfluß des Prozeßmediums schützt. Auf die zweite Dichtstufe wird an nachfolgender Stelle noch näher eingegangen.

Bei der ersten Dichtstufe kann es sich z.B. um einen Kunststofftopf (bei Radar- oder Ultraschall-Meßgeräten), um eine Metallmembran (bei Vibrationsgrenzschaltern), um eine Stopfbuchspackung oder um eine Metallringdichtung (bei Radar-, TDR- oder kapazitiven Meßgeräten im Hochtemperaturbereich), um eine Glasdurchführung (bei TDR- oder kapazitiven Meßgeräten) oder um eine Elastomerdichtung (bei allen Arten von Meßgeräten) handeln.

Als Detektoreinheit können die unterschiedlichsten Einheiten eingesetzt werden. Bevorzugt wird in dem Innenraum des Gehäuses die Feuchte, der Druck oder die Gaskonzentration überwacht. Im Falle von Zweidraht-Meßgeräten muß der Leistungsverbrauch der Detektoreinheit gering sein. Idealerweise wird daher eine passive Detektoreinheit verwendet. Beispielsweise wird einfach ein beweglich angeordnetes Teil durch den ansteigenden Druck in dem Gehäuse verschoben, oder es wird ein Reed-Relais betätigt.

Gemäß einer vorteilhaften Weiterbildung der erfindungsgemäßen Vorrichtung ist das Gehäuse zwischen der ersten Dichtstufe und einem Transmitter vorgesehen ist, in dem zumindest eine elektrische und/oder elektronische Komponente des Feldgeräts angeordnet ist. Bevorzugt entspricht die Regel-/Auswerteeinheit dem Transmitter. Weiterhin wird vorgeschlagen, daß das Gehäuse und der Transmitter zur Aufnahme der zumindest einen elektrischen und/oder elektronischen Komponente des Feldgeräts über eine Verbindungsleitung miteinander verbunden sind.

Insbesondere ist das Gehäuse so ausgestaltet, daß es den Transmitter von dem Sensor zur Erfassung der physikalischen und/oder chemischen Prozeßgröße bzw. vom Prozeß trennt bzw. absetzt. Gemäß einer Ausgestaltung handelt es sich bei dem Gehäuse um ein Verbindungsrohr. Im Prinzip kann es sich hierbei jedoch um einen beliebig ausgestalteten Hohlraum handeln.

Gemäß einer vorteilhaften Weiterbildung der erfindungsgemäßen Vorrichtung ist die erste Dichtstufe in dem Endbereich des Gehäuses angeordnet, der dem Prozeß zugewandt ist; zusätzlich ist eine zweite Dichtstufe in dem Endbereich des Gehäuses vorgesehen, der vom Prozeß abgewandt ist. Als zweite Dichtstufe können mit Ausnahme der Metallmembran oder dem Kunststofftopf alle Arten von Dichtungen verwendet werden, wie sie auch für die erste Dichtstufe zum Einsatz kommen können. Bevorzugt wird jedoch eine Glasdurchführung eingesetzt, da hier die Möglichkeit besteht, die elektrischen Versorgungsleitungen und/oder die Signalleitungen gasdicht durchzuführen. Weiterhin kann als zweite Dichtstufe eine Kabelverschraubung bzw. ein gedichtetes Installationsrohr (conduit seal) eingesetzt werden.
Bei einer konventionellen Verdrahtung mit Leitungen kommt bevorzugt, da sehr kostengünstig, eine Kabelverschraubung als zweite Dichtstufe zum Einsatz. Die Anforderungen an die zweite Dichtstufe sind dann nicht besonders groß, wenn das Gehäuse wie üblich über ein semipermeables Filter (z.B. Gore Tex) belüftet wird. Dann muß die zweite Dichtstufe, sprich die Kabelverschraubung, entsprechend den derzeitig gültigen Normen lediglich für ca. eine Minute 150 % des maximalen Drucks im Gehäuse ohne sichtbare Leckage aushalten.

Alternativ kann als zweite Dichtstufe ein Conduit Seal verwendet werden. Bei dem Conduit Seal handelt es sich um ein Rohrstück innerhalb des elektrischen Installationsrohrnetzes, das vergossen und entsprechend nationaler Normen in Bereichen mit explosionsfähiger Atmosphäre als Flammendurchschlagssperre vorgeschrieben ist. Ist hier entsprechend dem aktuellen Stand der Technik keine Detektionseinheit vorhanden, muß die Verrohrung entsprechund unterschiedlicher nationaler Normen zusätzlich gasdicht gegenüber dem Prozeß sein. Allerdings gelten die ohnehin zu installierenden Conduit Seals im Sinne der Sicherheitstechnik nicht als gasdicht. Mit der gängigen Praxis, die Verrohrung über Conduit Seals abzudichten, werden also die bereits gültigen Sicherheitsstandards noch nicht erfüllt. Mit einem zuvor beschriebenen Dual Seal Device entfällt die Forderung an die Gasdichtheit, womit die elektrische Installation wesentlich vereinfacht wird.
Insbesondere handelt es sich bei dem Gehäuse um den Transmitter, in dem die zumindest eine elektrische und/oder die elektronische Komponente des Feldgeräts angeordnet ist. Darüber hinaus wird vorgeschlagen, daß die zweite Dichtstufe zwischen dem Transmitter und einer entfernten Kontrollstelle angeordnet ist. Als besonders günstig wird es im Zusammenhang mit der erfindungsgemäßen Vorrichtung angesehen, wenn die erste Dichtstufe und/oder die zweite Dichtstufe gasdicht ausgestaltet sind/ist.

Eine vorteilhafte Ausgestaltung der erfindungsgemäßen Vorrichtung schlägt vor, daß die Detektoreinheit in das Gehäuse, in den Transmitter oder in das Verbindungsrohr integriert ist. Insbesondere ist die Detektoreinheit als Zusatzmodul ausgebildet, das an das Gehäuse, an den Transmitter oder an das Verbindungsrohr adaptierbar ist.

Eine vorteilhafte Ausgestaltung der erfindungsgemäßen Vorrichtung beinhaltet, daß mindestens ein Teil des Transmitters, des Gehäuses oder des Verbindungsrohrs unter Unterdruck steht, und wobei die Detektoreinheit ein Druckmeßgerät, ein Vakuumschalter und/oder ein Druckschalter ist. Unterdruck ist dabei ein Druck relativ zum Umgebungsdruck des Prozesses. Vorzugsweise handelt es sich um ein Vakuum. Die Ausgestaltung hat den Vorteil, daß das Auftreten einer Korrosion zu einem Druckanstieg führt. Somit ist es nicht erforderlich, daß für den Alarm Medium eindringt und somit ist keine besondere Abstimmung von Detektoreinheit und Medium aufeinander notwendig.

Eine weitere vorteilhafte Ausgestaltung der erfindungsgemäßen Vorrichtung sieht vor, daß mindestens ein Teil des Transmitters, des Gehäuses oder des Verbindungsrohrs unter Überdruck steht, und wobei die Detektoreinheit ein Druckmeßgerät und/oder ein Druckschalter ist. Das Gehäuse steht unter Überdruck relativ zum Umgebungsdruck beim Prozeß. Beim Überdruck handelt es sich insbesondere um einen Druck, der oberhalb des maximal zulässigen Prozeßdruckes liegt, für den das Feldgerät ausgelegt ist, um einen Druckabfall durch eine undichte Stelle messen zu können. Der Überdruck gegenüber dem Unterdruck hat den Vorteil, daß kein Gas durch die undichte Stelle eingesogen werden kann.

In den beiden obigen Ausgestaltungen wird das Druckverhältnis im Gehäuse, im Transmitter oder im Verbindungsrohr durch ein Druckmeßgerät oder durch einen Druckschalter oder einen Vakuumschalter - je nach dem eingestellten Druck - überwacht. Ändert sich der Druck durch eine undichte Stelle in der ersten Dichtstufe, so wird ein Alarm ausgelöst, ohne daß z.B. Gas in das Gehäuse bereits eindringt. Ein Vorteil dieses Ausgestaltung ist, daß sie weitgehendst unabhängig ist von den im Prozeß herrschenden Parametern wie z.B. Leitfähigkeit, Temperatur oder Dielektrizitätskonstante des Mediums. Steht das Gehäuse unter Überdruck, so kann eine Variante sein, daß zwei Druckbereiche vorgegeben sind, die zu einem Alarm führen. Zum einen ist dies der Druckbereich unterhalb des eingestellten Überdrucks, zum anderen der Bereich über einer vorgegeben Schwelle oberhalb des Überdrucks. Der letztere Grenzwert für die Alarmmeldung bezieht sich darauf, wenn z.B. durch Korrosion eine Undichtigkeit gegeben ist und wenn im Prozeß ein Druck oberhalb des für das Meßgerät erlaubten Wertes herrscht.

Eine vorteilhafte Ausgestaltung beinhaltet, daß in der Detektoreinheit eine bewegliche Einheit vorgesehen ist, die sich aus einer Ruhelage herausbewegt, sobald die überwachte Zustandsgröße in dem Innenvolumen des Transmitters, des Gehäuses oder des Verbindungsrohrs einen vorgegebenen Grenzwert erreicht. Es kann sich beispielsweise um einen Kolben handeln, der an einer Feder hängt. Tritt eine Korrosion einer Dichtstufe auf, so dringt Druck in das Gehäuse, den Transmitter oder das Verbindungsrohr ein und der Kolben wird z.B. in einem Zylinder - hierbei kann es sich auch um das Verbindungsrohr selbst handeln - oder in einer Bohrung bewegt. Die Bewegung kann dann von einem Näherungsschalter, einem einfachen Kontakt oder einem Relais detektiert werden. Dies ist eine sehr einfache Ausgestaltung der Detektoreinheit, die vor allem nur sehr wenig Strom benötigt.

Eine vorteilhafte Ausgestaltung sieht vor, daß ein Teil des Transmitters, des Gehäuses oder des Verbindungsrohrs und die Detektoreinheit eine modulare Einheit bilden. Sind also beispielsweise der Sensor und die Regel-/Auswerteeinheit durch ein Verbindungsrohr miteinander verbunden, so läßt sich die modulare Einheit aus Verbindungsrohr und Detektoreinheit an einer passenden Stelle in diesem Verbindungsrohr anbringen, z.B. verschweißen. Dafür sind dann auch entsprechende Dichtungen erforderlich. Diese Abdichtungen der modularen Einheit können die erste und die zweite Dichtstufe ergänzen oder je nach Konstruktion kann damit eine oder können beide Dichtstufen ersetzt werden. Insbesondere ist die modulare Einheit relevant, wenn das Gehäuse, der Transmitter oder das Verbindungsrohr unter Überdruck steht, wenn jedoch die Elektronik z.B. der Regel-/Auswerteinheit nicht für einen solchen Druck ausgelegt ist. Somit ergibt sich durch diese modulare, gekapselte Einheit auch eine zusätzliche Dichtung vor der Regel-/Auswerteinheit. Bei der Ausgestaltung der modularen Einheit und der Art der Anbringung muß jedoch darauf geachtet werden, daß es bei einer undichten Stelle in der ersten Dichtstufe nur die eine Möglichkeit durch die modulare Einheit hindurch gibt, d.h. es darf keine Umgehung der modularen Einheit vorhanden und/oder möglich sein. Eine solche modulare Einheit hat weiterhin den Vorteil, daß mit ihr Feldgeräte zusätzlich ausgerüstet werden können, indem eine solche modulare Einheit z.B. in ein normales Verbindungsrohr eingebracht wird. Weiterhin ist der Vorteil, daß z.B. nicht in einem ganzen Verbindungsrohr oder einem ganzen Gehäuse des Feldgerätes ein Unter- oder Überdruck erzeugt werden muß. Die modulare Einheit ermöglicht also die Aufrüstung eines Feldgerätes und sie vereinfacht die technische Umsetzung.

Eine vorteilhafte Ausgestaltung beinhaltet, dass mindestens in einem Teil des Transmitters, des Gehäuses und/oder des Verbindungsrohrs ein Zwischenmedium befindlich ist, welches sich von innerhalb des Behälters befindlichen Medien, insbesondere dem Prozessmedium unterscheidet, und dass die Detektoreinheit derartig ausgestaltet ist, dass sie das Zwischenmedium überwacht. Die Idee ist also, dass sich im Gehäuse ein Medium befindet, welches sich von den Medien außerhalb des Behälters, vorzugsweise auch außerhalb des Gehäuses selbst, unterscheidet. Dieses Zwischenmedium tritt also möglichst außerhalb des Feldgerätes nicht auf, zumindest jedoch nicht außerhalb des Behälters. Bildet sich in einer der Dichtstufen eine undichte Stelle, so entweicht das Zwischenmedium oder es wird mit dem eindringenden Medium, z.B. dem Prozessmedium oder einem sich im Behälter gebildeten Gasgemisch vermischt. Ist das Zwischenmedium generell außerhalb des Gehäuses, des Transmitters oder des Verbindungsrohres nicht zu finden, so werden auch undichte Stellen überwacht, die dazu führen, dass ein Medium außerhalb des Behälters in das Feldgerät eindringt. Die Detektoreinheit ist so ausgestaltet, dass sie speziell dieses Zwischenmedium, seine Anwesenheit, seine physikalische oder chemische Beschaffenheit überwacht. Entweicht das Zwischenmedium, so nimmt die von der Detektoreinheit gemessene Intensität ab. Die Detektoreinheit überwacht also das Zwischenmedium und schlägt bei Änderungen Alarm. Die Art des Unterschieds des Zwischenmediums von den möglichen, im Behälter befindlichen Medien ist also durch die Art und Ausgestaltung der Detektoreinheit bedingt, bzw. umgekehrt muss die Detektoreinheit so gewählt werden, dass sie zwischen dem Zwischenmedium und den Medien - also das eigentliche Prozessmedium und mögliche Gasgemische - im Behälter differenzieren kann.

Eine vorteilhafte Ausgestaltung sieht vor, dass es sich bei dem Zwischenmedium um ein Gas handelt, und dass es sich bei der Detektoreinheit um einen entsprechenden Gassensor handelt. Die Idee ist also, dass der Innenraum des Gehäuses mit einem Gas gefüllt ist, z.B. Kohlenmonoxid, Kohlendioxid, Methan oder Äthylen, und dass z.B. die Gaskonzentration mit einem Gassensor überwacht wird. Als Gassensor lässt sich ein Halbleiter-Gassensor oder ein optischer (Infrarot) MEMS-Gassensor oder einen Quarzschwinger (Biegeschwinger oder SAW-Resonator mit empfindlicher Beschichtung) verwenden. Der Gassensor überwacht ständig die Gaskonzentration im Zwischenraum und liefert Alarm, wenn sich diese Konzentration wegen einer möglichen Undichtigkeit ändert. Besondere Vorteile bieten Infrarotsensoren, die ein bestimmtes Gas selektiv fühlen können. Durch diese ist der Innenraum nicht physikalisch, sondern chemisch überwacht. Weiterhin bleibt die Durchschlagspannung des Sensors hoch und definiert, was für die Normanforderungen bei Ex-Geräten wichtig ist. Zudem ist die Ausgestaltung für jeglichen Prozessdruck geeignet: Ist der Prozeßdruck geringer als der Druck im Innenraum des Gehäuses, so wird das Gas aus dem Innenraum durch die undichte Stelle abgesaugt. Falls der Druck höher ist, wird das Gas komprimiert und mit dem eindringenden Gas vermischt. Dadurch wird z.B. die Absorption im Infrarot-Spektrum auf Signature-Wellenlängen geändert. Diese Ausgestaltung ist besonders mit der Ausgestaltung verbunden, in welcher die Dichtstufen gasdicht sind. Allgemein werden also spektroskopisch die Eigenschaften des Zwischenmediums, das in diesem Fall ein Gas ist, überwacht.

Entsprechende Gassensoren können beispielsweise nach dem Laufzeitverfahren oberflächenakustischer Wellen in sogenannten SAW-Sensoren arbeiten, bei dem die Laufzeit der oberflächenakustischen Wellen in einem gasempfindlichen Film mit der Laufzeit in einem Referenzfilm verglichen wird. Eine entsprechende Vorrichtung ist beispielsweise in der internationalen Patentanmeldung WO 83/015111 beschrieben. Solche Vorrichtungen sind beispielsweise zur Detektion von Schwefel-Wasserstoff oder Quecksilberdämpfung geeignet. Ein SAW-Sensor für die Detektion von Quecksilberdämpfen ist beispielsweise in der US-Patent-Nr. 5,992,215 beschrieben.

Ein Halbleitergassensor auf Basis eines gasempfindlichen Feldeffekttransistors ist in der deutschen Patentschrift DE 199 58 311 offenbart. Ein anderer Feldeffekttransistor, der nach dem Prinzip der Messung der Austrittsarbeit zur Bestimmung von Ammoniak bzw. Ammoniakderivaten geeignet ist, wird in der deutschen Patentschrift DE 199 26 747 beschrieben.

Neben den in den genannten Schriften offenbarten Gassensoren ist auch die sogenannte Karlsruher Mikronase, welche Leitfähigkeitsmessungen an segmentierten Metalloxidfilmen zum Zwecke der Gassensorik implementiert, als Kontaminationssensor geeignet. Einzelheiten hierzu sind beispielsweise in der Internetpräsenz zu dem Stichwort "Karlsruher Mikronase" zu finden.

Die vom IBM Forschungslabor Goschnick entwickelte elektronische Nase mit einer Vielzahl von mikroskopischen Biegebalgen, die selektiv bestimmte Gase binden, ermöglicht aus der vergleichenden Analysen der mechanischen Veränderungen der jeweiligen Biegebalgen eine Bestimmung der Zusammensetzung des gebundenen Gases. Das Frauenhofer ITM einen geeigneten Halbleitergassensor mit monolithisch integrierten CMOS-Schaltkreisen.

Für Anwendungen in explosionsgefährdeten Umgebungen wird der Fachmann einen Gassensor auswählen, welcher bei niedrigen Betriebstemperaturen, insbesondere Raumtemperatur arbeitet. Hierzu sind u.a. SAW-Sensoren geeignet. Entsprechende SAW-Sensoren, die auf CMOS-Silizium-Technologie basieren und eine piezoelektrische Schicht mit ZnO sind beispielsweise von Bender und Mokwa vom Institut für Werkstoffe der Elektrotechnik der RWTH, Aachen beschrieben in einem Artikel mit dem Titel Temperature Stabilized Silicon Based Surface-Acoustic-Wave Gas Sensors for the Detection of Solvent Vapours, der im Internet unter "www.iwe.rwth-aachen.de/iwe1/Publikationen/98-02s.pdf" abgerufen werden kann.

Die Erfindung wird anhand der nachfolgenden Zeichnungen näher erläutert. Es zeigt.
- Fig. 1:: eine schematische Darstellung einer ersten Ausführungsform der erfindungsgemäßen Vorrichtung;
- Fig. 2:: eine schematische Darstellung einer zweiten Ausführungsform der erfindungsgemäßen Vorrichtung;
- Fig. 3:: eine schematische Darstellung einer dritten Ausführungsform der erfindungsgemäßen Vorrichtung;
- Fig. 4:: eine schematische Darstellung einer vierten Ausführungsform der erfindungsgemäßen Vorrichtung;
- Fig. 5:: eine schematische Darstellung einer fünften Ausführungsform der erfindungsgemäßen Vorrichtung;
- Fig. 6:: eine schematische Darstellung einer sechsten Ausführungsform der erfindungsgemäßen Vorrichtung; und
- Fig. 7:: eine schematische Darstellung einer siebten Ausführungsform der erfindungsgemäßen Vorrichtung.

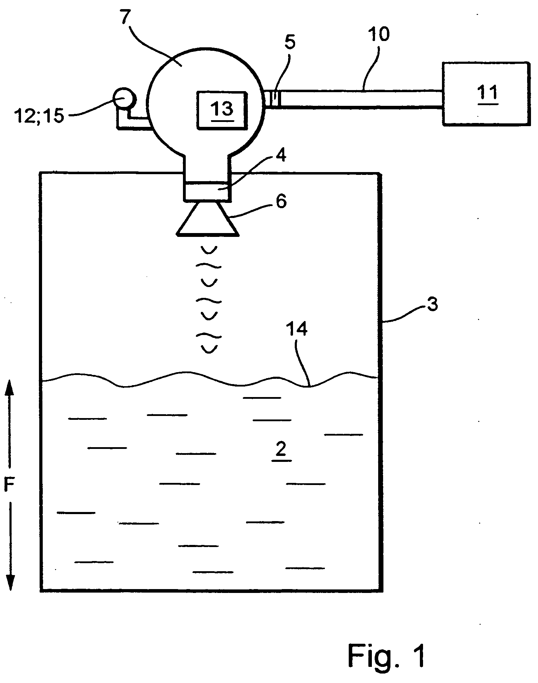

In Fig. 1 ist ein am Deckel eines Behälters 3 befestigtes Füllstandsmeßgerät 1 dargestellt, das nach dem Radar -Prinzip arbeitet. Elektromagnetische Meßsignale werden über die Antenne 6 in Richtung der Oberfläche 14 des Prozeßmediums 2 abgestrahlt; die an der Oberfläche 14 des Prozeßmediums 2 reflektierten Echo-Meßsignale werden über die Antenne 6 empfangen. Die Regel-/Auswerteeinheit 13 ermittelt anhand der Laufzeit der Meßsignale deren Laufweg und bei bekannter Höhe des Behälters 3 den aktuellen Füllstand F des Prozeßmediums 2 in dem Behälter 3. Die Regel-/Auswerteeinheit 13 ist in dem Transmitter 7 angeordnet.

Bei der in Fig. 1 dargestellten Ausführungsform werden zwei Dichtstufen 4, 5 eingesetzt. Die erste Dichtstufe 4 dichtet den Transmitter 7 mit den empfindlichen Elektronikkomponenten gegen den Prozeß hin ab. Bevorzugt kommt eine der Dichtungen zum Einsatz, wie sie bereits an vorhergehender Stelle eingehend beschrieben ist. Die Dichtstufe 4 soll sicherstellen, daß keine aggressive, giftige oder explosive Behälteratmosphäre in das Gehäuse des Transmitters 7 eindringt. Bevorzugt ist diese Dichtstufe 4 daher gasdicht ausgestaltet. Insbesondere handelt es sich bei einer gasdicht ausgestalteten Dichtstufe um eine Glasdurchführung.

Aufgrund von Alterungsprozessen kann nicht ausgeschlossen werden, daß die Dichtstufe 4 ihre Dichtfunktion verliert. Um ein Eindringen von Prozeßatmosphäre oder Prozeßmedium 3 in den Innenraum des Transmitters 7 rechtzeitig zu erkennen, d.h. so frühzeitig zu erkennen, daß das Meßgerät 1 nicht ausfällt, ist dem Transmitter 7 eine Detektionseinheit 12 zugeordnet, die anhand einer sich ändernden Gaskonzentration, einer sich ändernden Feuchte oder anhand eines sich ändernden Innendrucks erkennt, ob der Transmitter 7 eine undichte Stelle aufweist. Bei dem gezeigten Beispiel ist die Detektoreinheit 12 als Zusatzmodul 15 an den Transmitter 7 adaptiert. Sobald eine Leckage auftritt, wird diese dem Bedienpersonal zur Anzeige gebracht, so daß umgehend entsprechende Gegenmaßnahmen ergriffen werden können.

Über die Verbindungsleitung 10 ist der Transmitter 7 mit einer entfernten Kontrollstelle 11 verbunden. Um sicherzustellen, daß bei einer Leckage der ersten Dichtstufe 4 keine Behälteratmosphäre über die Verbindungsleitung 10 in die Kontrollstelle 11 gelangt, ist eine zweite Dichtstufe 5 vorgesehen. Diese Dichtstufe kann so ausgestaltet sein, wie dies bereits an vorhergehender Stelle eingehend beschrieben ist. Durch diese redundante Auslegung der Dichtstufen ist die Kontrollstelle 11 quasi doppelt sicher gegen Eindringen von Behälteratmosphäre geschützt. Dieser redunante Dichtschutz inklusive der zusätzlichen Detektoreinheit 12 bietet ein Höchstmaß an Sicherheit und erfüllt damit höchste Sicherheitsstandards. Verwiesen wird in diesem Zusammenhang auch auf den ISA-Standard 12.27.01 "Requirements for Proceß Sealing between Electrical Systems and Potentially Flammable Process Fluids".

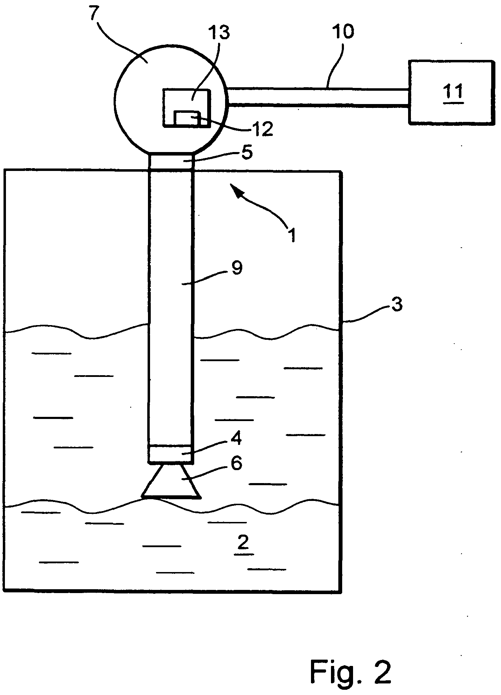

Fig. 2 bezieht sich auf eine zweite vorteilhafte Ausgestaltung der erfindungsgemäßen Vorrichtung. Bei dem Feldgerät handelt es sich um einen Vibrationsdetektor bzw. um einen Vibrationsgrenzschalter. Zwecks Erkennung des Erreichens eines vorbestimmten Füllstands wird bei Vibrationsdetektoren der Effekt ausgenutzt, daß sich die Schwingfrequenz, insbesondere die Resonanzfrequenz einer schwingfähigen Einheit in Abhängigkeit davon ändert, ob die Schwingung in Luft/Gas oder in dem festen oder flüssigen Prozeßmedium 2 erfolgt.

Um den Füllstand im unteren Bereich des Behälters 3 überwachen zu können, ist die schwingfähige Einheit 6 am unteren Ende des Verbindungsrohrs 9 befestigt. Zwecks redundanter Trennung des Transmitters 7 vom Prozeß sind im unteren und im oberen Bereich des Verbindungsrohrs 9 eine erste Dichtstufe 4 und eine zweite Dichtstufe 5 angeordnet.

Zusätzlich wird über die Detektionseinheit 12 erkennbar, ob trotz der beiden als redundante Sicherheitsmaßnahmen ausgestalteten Dichtstufen 4, 5 eine undichte Stelle am Transmitter 7 vorhanden ist. Im gezeigten Fall ist die Detektoreinheit 12 integraler Teil der Regel-/Auswerteeinheit 13.

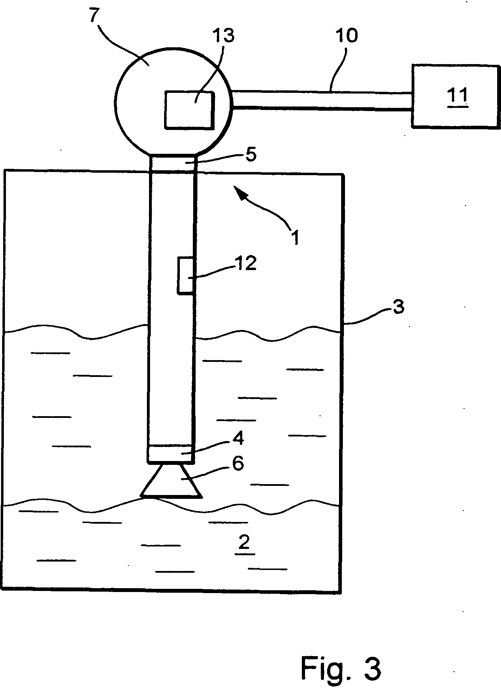

Die in Fig. 3 dargestellte Ausführungsform unterscheidet sich von der in Fig. 2 gezeigten dadurch, daß hier die Detektoreinheit 12 in dem Verbindungsrohr 9 und nicht in dem Transmitter 7 vorgesehen ist. Somit spricht die Detektoreinheit 12 bereits bei einem Versagen der ersten Dichtstufe 4 an.

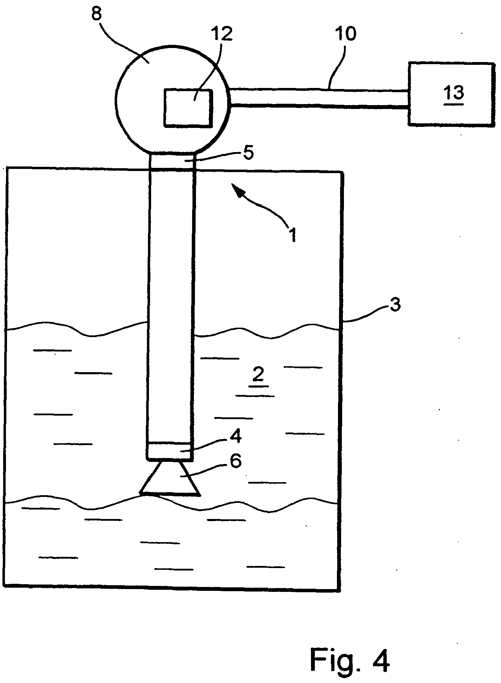

Fig. 4 bezieht sich auf eine Ausgestaltung der erfindungsgemäßen Vorrichtung bei der die Regel-/Auswerteeinheit 13 über eine Verbindung 10 von einem Gehäuse 8, in dem die Detektoreinheit 12 zu finden ist, abgesetzt ist. Ansonsten entspricht der Aufbau dieser Ausführungsform im wesentlichen der Ausführungsform, die in Fig. 2 gezeigt ist.

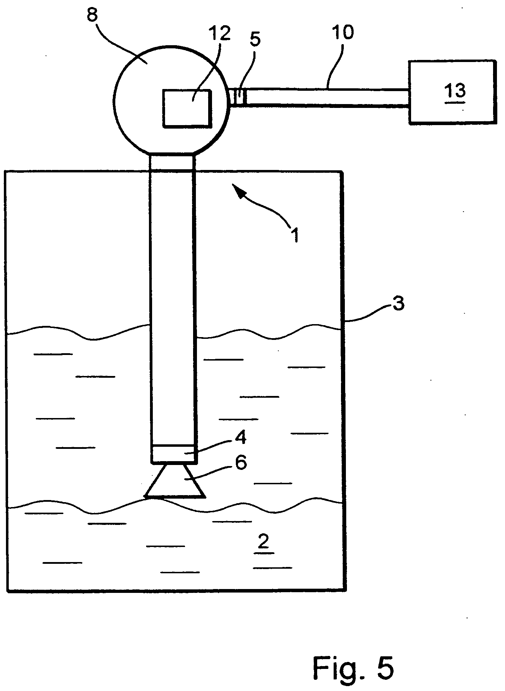

Die in Fig. 5 beschriebene Ausführungsform der erfindungsgemäßen Vorrichtung unterscheidet sich von der in Fig. 4 gezeigten Ausgestaltung lediglich dadurch, daß die zweite Dichtstufe 5 zwischen dem Gehäuse 8 mit integrierter Detektoreinheit 12 und der Regel-/Auswerteeinheit 13 angeordnet ist. In Fig. 5 ist die zweite Dichtstufe 5 der Detektoreinheit 12 nachgelagert. Im Unterschied hierzu ist bei der in Fig. 4 gezeigten Ausgestaltung die zweite Dichtstufe 5 der Detektoreinheit 12 vorgelagert.

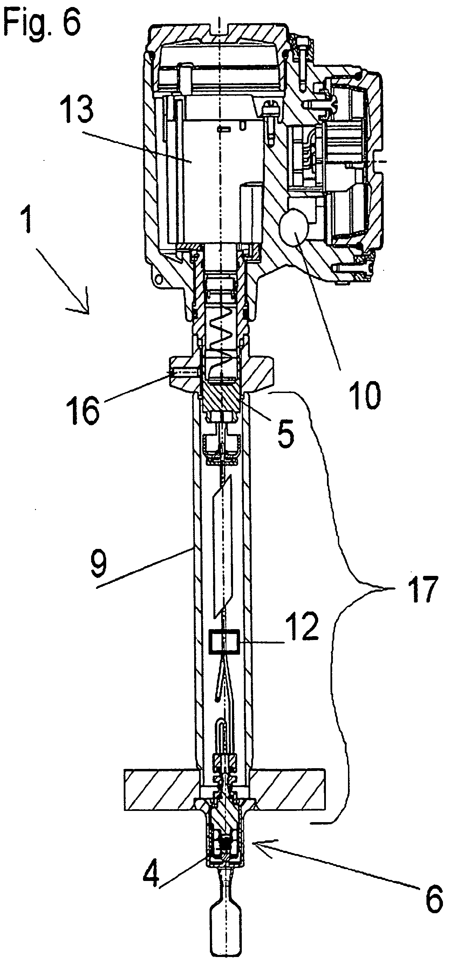

Die dargestellten Ausführungsprinzipien sind in Fig. 6 beispielhaft für die Anordnung der Fig. 3 detaillierter dargestellt. Bei dem Feldgerät 1 in Fig. 6 handelt es sich um einen Vibrationsdetektor. Beim Sensor 6 in Richtung Prozeß befindet sich die erste Dichtstufe 4. Der Sensor 6 und die Regel-/Auswerteeinheit 13 sind durch das Verbindungsrohr 9, in dem sich die Detektoreinheit 12 befindet, miteinander verbunden. Das Verbindungsrohr 9 wird unter Ausnutzung der Bohrung 16 z.B. unter Überdruck gesetzt, vorzugsweise mit einem Schutzgas wie Argon. Diese Bohrung wird anschließend durch einen Schraubstopfen verschlossen, der zusätzlich verschweißt werden kann. Der Überdruck wird anschließend durch die Detektoreinheit 12 - z.B. ein Druckschalter - überwacht. Ergibt sich an der ersten Dichtstufe 4 eine undichte Stelle, so fällt der Überdruck ab. Dies führt sogleich zu einem Alarm, ohne daß z.B. ein Gas oder das Medium in das eigentliche Elektronikgehäuse eindringt. Insbesondere kann die Detektionseinheit auch aus einem mechanischen Schalter bestehen, der keine weiteren Versorgungsleitungen benötigt. Dann können mit diesem Schalter die Sensor-Versorgungsleitungen unterbrochen oder kurzgeschlossen werden. Beide Fälle sind als eindeutige Fehlerzustände auswertbar. Der Vorteil dieser Lösung ist die einfache und billige Ausführung. Es können aber auch separate Leitungen zur Speisung der Detektoreinheit verwendet werden. Damit sind auch anspruchsvolle Lösungen realisierbar. Die erste Dichtstufe 4, die zweite Dichtstufe 5, die Detektoreinheit 12 und das Verbindungsrohr 9 bilden hier die modulare Einheit 17. Eine alternative Ausgestaltung ist, daß zwei zusätzliche Dichtungen nur einen Teil des Verbindungsrohres 9, in dem sich die Detektoreinheit 12 befindet, abdichten und daß dann nur diese kleinere modulare Einheit 17 unter Überdruck gesetzt wird. Dadurch wird z.B. die Elektronik in der Regel-/Auswerteinheit 13 nicht dem Überdruck ausgesetzt. Eine generelle Alternative ist, daß nicht ein Überdruck, sondern ein Unterdruck erzeugt wird. Im Falle eines Vakuums handelt es sich dann bei der Detektoreinheit 12 auch um einen Vakuumschalter.

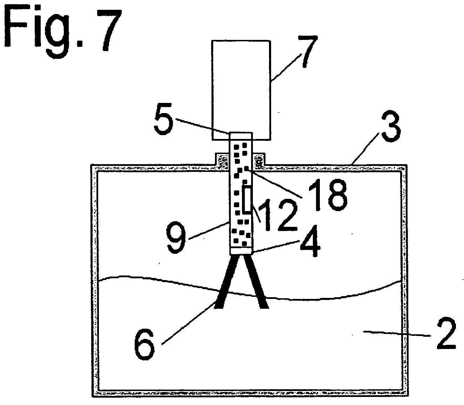

Die Fig. 7 zeigt eine Schwinggabel als Sensor 6, die über ein Verbindungsrohr 9 mit dem Transmitter 7 verbunden ist. Der Übergang des Sensors 6 zum Verbindungsrohr 9 ist über die erste 4 und der Übergang des Verbindungsrohrs 9 zum Transmitter 7 ist über die zweite Dichtstufe 5 verschlossen. Das Verbindungsrohr 9 ist mit einem Zwischenmedium 18 gefüllt, bei dem es sich hier um ein Gas handeln soll. Damit geht einher, dass die erste 4 und die zweite Dichtstufe 5 gasdicht ausgeführt sind. So kann z.B. die zweite Dichtstufe 5 eine bekannte Glasdurchführung sein. Das Zwischenmedium 18 wird von der Detektionseinheit 12 überwacht. Dabei handelt es sich beispielsweise um einen optischen MEMS-Gassensor. Ein solcher Sensor nutzt aus, dass die meisten Gase eine spezifische Absorptionslinie für Infrarotlicht haben. Der Sensor 12 misst die Transmission von Licht durch das Gas. Die Wellenlänge des absorbierten Lichts gibt Auskunft über das Gas und die Intensität des absorbierten Lichts ermöglicht die Bestimmung der Gasmenge. Durch diese beiden Aussagen wird überwacht, dass das Zwischenmedium 18 vorhanden ist und nicht beispielsweise durch das eindringende Gas vom Prozessmedium 2 ersetzt wird. Ein Vorteil solcher Detektionseinheiten besteht auch darin, dass sie sehr klein sind, z.B. auf einem einzigen Chip Platz finden.

### Bezugszeichenliste

- 1: Feldgerät
- 2: Prozeßmedium
- 3: Behälter
- 4: Erste Dichtstufe
- 5: Zweite Dichtstufe
- 6: Sensor
- 7: Transmitter
- 8: Gehäuse
- 9: Verbindungsrohr
- 10: Verbindungsleitung
- 11: Entfernte Kontrollstelle
- 12: Detektoreinheit
- 13: Regel-/Auswerteeinheit
- 14: Oberfläche des Prozeßmediums
- 15: Zusatzmodul
- 16: Bohrung
- 17: Modulare Einheit
- 18: Zwischenmedium

## Patentansprüche

1. Vorrichtung zur Überwachung eines Feldgeräts (1) zur Bestimmung und/oder Überwachung einer physikalischen und/oder chemischen Prozeßgröße eines Prozeßmediums (2) mit einer ersten dem Prozeß zugewandten Dichtstufe (4) und zumindest einem Gehäuse (7; 8; 9) mit einem vorgegebenen Innenvolumen, das auf der vom Prozeß abgewandten Seite der ersten Dichtstufe (4) vorgesehen ist, wobei die erste Dichtstufe (4) das Gehäuse (7, 8, 9) gegen den Prozeß hin abdichtet, wobei das Gehäuse (8; 9) zwischen der ersten Dichtstufe (4) und einem Transmitter (7), in dem zumindest eine elektrische und/oder eine elektronische Komponente des Feldgeräts (1) angeordnet ist, vorgesehen ist oder
wobei es sich bei dem Gehäuse (8) um den Transmitter (7) handelt, in dem zumindest die elektrische und/oder die elektronische Komponente des Feldgeräts (1) angeordnet ist,
wobei Energie über die erste Dichtstufe (4) in Richtung des Prozeßmediums (2) übertragbar ist, wobei diese Energie mit dem Prozeßmedium (2) in Wechselwirkung tritt,
wobei an oder in dem Gehäuse (8; 9), oder an oder in dem Transmitter (7) zumindest eine Detektoreinheit (12) vorgesehen ist, die zumindest eine Zustandsgröße des Innenvolumens des Gehäuses (7; 8; 9) überwacht,
wobei eine Regel- /Auswerteeinheit (13) vorgesehen ist, die anhand der mit dem Prozeßmedium (2) wechselwirkenden Energie die physikalische und/oder chemische Prozeßgröße bestimmt,
wobei eine zweite Dichtstufe (5) in dem Endbereich des Gehäuses (9) vorgesehen ist, der vom Prozeß abgewandt ist oder wobei die zweite Dichtstufe (5) zwischen dem Transmitter (7) und einer entfernten Kontrollstelle (11) angeordnet ist,
wobei die zweite Dichtstufe (5) die Kontrollstelle (11) und/oder die Regel-Auswerteeinheit (13) gegen den Prozeß hin abdichtet,
und
wobei die Regel-/Auswerteeinheit (13) und/oder eine anderweitige Überwachungseinheit anhand der überwachten Zustandsgröße in dem Innenvolumen des Gehäuses (7; 8; 9) erkennt und/oder anzeigt, ob die Dichtstufen (4, 5) das Gehäuse (8; 9) bzw. den Transmitter gegen den Prozeß hin abdichtet und/oder einen Alarm ausgibt, sobald die überwachte Zustandsgröße in dem Innenvolumen des Gehäuses (7; 8; 9) einen vorgegebenen Grenzwert erreicht.

2. Vorrichtung nach Anspruch 1,
wobei das Gehäuse (8) den Transmitter (7) von dem Sensor (6) zur Erfassung der physikalischen und/oder chemischen Prozeßgröße bzw. vom Prozeß trennt bzw. absetzt.

3. Vorrichtung nach Anspruch 1,
wobei die erste Dichtstufe (4) und/oder die zweite Dichtstufe (5) gasdicht ausgestaltet sind/ist.

4. Vorrichtung nach Anspruch 1,
wobei die Detektoreinheit (12) in das Gehäuse (8), in den Transmitter (8) oder in ein Verbindungsrohr (9) integriert ist.

5. Vorrichtung nach Anspruch 1,
wobei die Detektoreinheit (12) als Zusatzmodul (15) ausgebildet ist, das an das Gehäuse (8), an den Transmitter (7) oder an das Verbindungsrohr (9) adaptierbar ist.

6. Vorrichtung nach einem oder mehreren der Ansprüche 1, 5 oder 6,
wobei mindestens ein Teil des Transmitters (7), des Gehäuses (8) oder des Verbindungsrohrs (9) unter Unterdruck steht, und wobei die Detektoreinheit (12) ein Druckmeßgerät, ein Vakuumschalter und/oder ein Druckschalter ist.

7. Vorrichtung nach einem oder mehreren der Ansprüche 1, 5 oder 6,
wobei mindestens ein Teil des Transmitters (7), des Gehäuses (8) oder des Verbindungsrohrs (9) unter Überdruck steht, und wobei die Detektoreinheit (12) ein Druckmeßgerät und/oder ein Druckschalter ist.

8. Vorrichtung nach einem oder mehreren der Ansprüche 1, 5 oder 6,
wobei in der Detektoreinheit (12) eine bewegliche Einheit vorgesehen ist, die sich aus einer Ruhelage herausbewegt, sobald die überwachte Zustandsgröße in dem Innenvolumen des Transmitters (7), des Gehäuses (8) oder des Verbindungsrohrs (9) einen vorgegebenen Grenzwert erreicht.

9. Vorrichtung nach Anspruch 7, 8 oder 9,
wobei ein Teil des Transmitters (7), des Gehäuses (8) oder des Verbindungsrohrs (9) und die Detektoreinheit (12) eine modulare Einheit (17) bilden.

10. Vorrichtung nach mindestens einem der vorhergehenden Ansprüche,
wobei mindestens in einem Teil des Transmitters (7), des Gehäuses (8) und/oder des Verbindungsrohrs (9) ein Zwischenmedium (18) befindlich ist, welches sich von innerhalb eines Behälters (3) befindlichen Medien, insbesondere dem Prozessmedium (2) unterscheidet, und wobei die Detektoreinheit (12) derartig ausgestaltet ist, dass sie das Zwischenmedium (18) überwacht.

11. Vorrichtung nach Anspruch 11,
wobei es sich bei dem Zwischenmedium (18) um ein Gas handelt, und wobei es sich bei der Detektoreinheit (12) um einen entsprechenden Gassensor handelt.

## Claims

1. Apparatus for monitoring a field device (1) designed to determine and/or monitor a physical and/or chemical process variable of a process medium (2) with a first seal (4), which faces towards the process, and at least one housing (7, 8, 9) with a predefined interior volume which is provided on the side of the first seal (4) facing away from the process, wherein the first seal (4) seals the housing (7, 8, 9) in relation to the process, wherein the housing (8, 9) is provided between the first seal (4) and a transmitter (7) in which at least one electrical and/or one electronic component of the field device (1) is arranged,
wherein the housing (8) is the transmitter (7) in which at least the electrical and/or electronic component of the field device (1) is arranged,
wherein energy can be transmitted via the first seal (4) in the direction of the process medium (2), wherein this energy interacts with the process medium (2),
wherein at least one detector unit (12), which monitors at least one status variable of the interior volume of the housing (7, 8, 9), is provided on or in the housing (8, 9) or on or in the transmitter (7),
wherein a control/evaluation unit (13) is provided which determines the physical and/or chemical process variable using the energy interacting with the process medium (2),
wherein a second seal (5) is provided in the end section of the housing (9) which faces away from the process, or wherein the second seal (5) is arranged between the transmitter (7) and a remote control station (11),
wherein the second seal (5) seals the control station (11) and/or the control/evaluation unit (13) in relation to the process,
and
wherein the control/evaluation unit (13) and/or another monitoring unit uses the monitored status variable in the interior volume of the housing (7, 8, 9) to detect and/or indicate whether the seals (4, 5) seal the housing (8, 9) or the transmitter (7) in relation to the process and/or issue an alarm as soon as the monitored status variable in the interior volume of the housing (7, 8, 9) reaches a predefined limit value.

2. Apparatus as claimed in Claim 1,
wherein the housing (8) separates or removes the transmitter (7) from the sensor (6), which is used to detect the physical and/or chemical process variable, or from the process.

3. Apparatus as claimed in Claim 1,
wherein the first seal (4) and/or the second seal (5) are/is designed as a gas-tight seal.

4. Apparatus as claimed in Claim 1,
wherein the detector unit (12) is integrated in the housing (8), the transmitter (7) or a connection tube (9).

5. Apparatus as claimed in Claim 1,
wherein the detector unit (12) is designed as a supplementary module (15), which can be adapted to the housing (8), the transmitter (7) or the connection tube (9).

6. Apparatus as claimed in one or more of Claims 1 or 5,
wherein at least one part of the transmitter (7), the housing (8) or the connection tube (9) is subject to negative pressure, and wherein the detector unit (12) is a pressure measuring device, a vacuum switch and/or a pressure switch.

7. Apparatus as claimed in one or more of Claims 1, 5 or 6,
wherein at least one part of the transmitter (7), the housing (8) or the connection tube (9) is subject to positive pressure, and wherein the detector unit (12) is a pressure measuring device, a vacuum switch and/or a pressure switch.

8. Apparatus as claimed in one or more of Claims 1, 5 or 6,
wherein a mobile unit is provided in the detector unit (12), wherein said mobile unit moves out of a rest position as soon as the monitored status variable in the interior volume of the transmitter (7), housing (8) or connection tube (9) reaches a predefined limit value.

9. Apparatus as claimed in Claim 7 or 8,
wherein a part of the transmitter (7), housing (8) or connection tube (9) and the detector unit (12) form a modular unit (17).

10. Apparatus as claimed in at least one of the previous claims,
wherein an intermediate medium (18) is located at least in one part of the transmitter (7), housing (8) and/or connection tube (9), said intermediate medium being different from media located within a vessel (3), particularly the process medium (2), and wherein the detector unit (12) is designed in such a way that it monitors the intermediate medium (18).

11. Apparatus as claimed in Claim 11,
wherein the intermediate medium (18) is a gas, and wherein the detector unit (12) is a corresponding gas sensor.

## Revendications

1. Dispositif pour la surveillance d'un appareil de terrain (1) destiné à la détermination et/ou la surveillance d'une grandeur process physique et/ou chimique d'un fluide de process (2) avec un premier étage d'étanchéité (4) orienté côté process et au moins un boîtier (7, 8, 9) présentant un volume intérieur prédéfini, le premier étage d'étanchéité (4) assurant l'étanchéité du boîtier (7, 8, 9) par rapport au process, le boîtier (8, 9) étant prévu entre le premier étage d'étanchéité (4) et un transmetteur (7), dans lequel est disposé au moins un composant électrique et/ou électronique de l'appareil de terrain (1),
pour lequel l'énergie peut être transmise par l'intermédiaire du premier étage d'étanchéité (4) en direction du fluide de process (2), cette énergie entrant en interaction avec le fluide de process (2),
pour lequel est prévue, sur ou dans le boîtier (8, 9) ou sur ou dans le transmetteur (7), au moins une unité de détection (12), qui surveille au moins une grandeur d'état du volume intérieur du boîtier (7, 8, 9),
pour lequel est prévue une unité de régulation / d'exploitation (13), qui détermine la grandeur process physique et/ou chimique au moyen de l'énergie interagissant avec le fluide de process (2),
pour lequel est prévue dans la zone d'extrémité du boîtier (9) un deuxième étage d'étanchéité (5), qui est situé à l'opposé du process ou pour lequel le deuxième étage d'étanchéité (5) est disposé entre le transmetteur (7) et un poste de contrôle (11) distant,
pour lequel le deuxième étage d'étanchéité (5) assure l'étanchéité du poste de contrôle (11) et/ou de l'unité de régulation / d'exploitation (13) par rapport au process,
et
pour lequel l'unité de régulation / d'exploitation (13) et/ou une autre unité de surveillance reconnaît et/ou affiche, au moyen de la grandeur d'état surveillée dans le volume intérieur du boîtier (7, 8, 9), si les étages d'étanchéité (4, 5) assurent l'étanchéité du boîtier (8, 9) ou du transmetteur (7) par rapport au process, et/ou émet une alarme sitôt que la grandeur d'état surveillée dans le volume intérieur du boîtier (7, 8, 9) atteint une valeur seuil prédéfinie.

2. Dispositif selon la revendication 1,
pour lequel le boîtier (8) sépare ou retire le transmetteur (7) du capteur (6) en vue de l'acquisition de la grandeur process physique et/ou chimique, ou du process.

3. Dispositif selon la revendication 1,
pour lequel le premier étage d'étanchéité (4) et/ou le deuxième étage d'étanchéité (5) sont/est conçu(s) de façon étanche au gaz.

4. Dispositif selon la revendication 1,
pour lequel l'unité de détection (12) est intégrée dans le boîtier (8), dans le transmetteur (7) ou dans un tube de liaison (9).

5. Dispositif selon la revendication 1,
pour lequel l'unité de détection (12) est conçue en tant que module supplémentaire (15), qui peut être adapté au boîtier (8), au transmetteur (7) ou au tube de liaison (9).

6. Dispositif selon l'une ou plusieurs des revendications 1 ou 5,
pour lequel au moins une partie du transmetteur (7), du boîtier (8) ou du tube de liaison (9) est soumise à une surpression, et pour lequel l'unité de détection (12) est un capteur de pression, un interrupteur à vide et/ou un pressostat.

7. Dispositif selon l'une ou plusieurs des revendications 1, 5 ou 6,
pour lequel au moins une partie du transmetteur (7), du boîtier (8) ou du tube de liaison (9) est soumise à une surpression, et pour lequel l'unité de détection (12) est un capteur de pression et/ou un pressostat.

8. Dispositif selon l'une ou plusieurs des revendications 1, 5 ou 6,
pour lequel est prévue dans l'unité de détection (12) une unité mobile, qui se déplace à partir d'une position de repos sitôt que la grandeur d'état surveillée atteint une valeur seuil prédéfinie dans le volume intérieur du transmetteur (7), du boîtier (8) ou du tube de liaison (9).

9. Dispositif selon la revendication 7 ou 8,
pour lequel une partie du transmetteur (7), du boîtier (8) ou du tube de liaison (9) et l'unité de détection (12) forment une unité modulaire (17).

10. Dispositif selon au moins l'une des revendications précédentes,
pour lequel se trouve au moins dans une partie du transmetteur (7), du boîtier (8) et/ou du tube de liaison (9) un fluide intermédiaire (18), qui se distingue du fluide se trouvant à l'intérieur du réservoir (3), notamment le fluide de process (2), et pour lequel l'unité de détection (12) est conçue de telle sorte qu'elle surveille le fluide intermédiaire (18).

11. Dispositif selon la revendication 11,
pour lequel, concernant le fluide intermédiaire (18), il s'agit d'un gaz et pour lequel, concernant l'unité de détection (12), il s'agit d'un détecteur de gaz approprié.
